# EUROPÄISCHE PATENTSCHRIFT

(11) **EP 2 304 231 B1**
(45) Veröffentlichungstag und Bekanntmachung des Hinweises auf die Patenterteilung: **27.03.2013**
(21) Anmeldenummer: 09761725.2
(22) Anmeldetag: 10.06.2009
(51) Int. Cl.: F03D 11/00, F03D 1/00

(54) **GEHÄUSE FÜR DIE GONDEL EINER WINDENERGIEANLAGE**
CASING FOR THE NACELLE OF A WIND TURBINE
CARTER POUR LA NACELLE D'UNE ÉOLIENNE

(30) Priorität: 10.06.2008 DE 102008027498
(43) Veröffentlichungstag der Anmeldung: 06.04.2011
(73) Patentinhaber: Kenersys GmbH, 48155 Münster (DE)
(72) Erfinder: ELSENHEIMER, Martina, 48432 Rheine (DE); BECKER, Markus, 48147 Münster (DE)
(74) Vertreter: Raffay & Fleck
(86) Internationale Anmeldenummer: PCT/EP2009/057128
(87) Internationale Veröffentlichungsnummer: WO 2009/150162

(56) Entgegenhaltungen:
- EP-A2- 1 860 322
- WO-A1-2008/000267
- DE-A1-102006 001 931

## Beschreibung

Gehäuse für die Gondel einer Windenergieanlage

### Technisches Gebiet

Die Erfindung betrifft ein Gehäuse für die Gondel einer Windenergieanlage mit den Merkmalen des Oberbegriffs des Anspruchs 1.

### Stand der Technik

Windenergieanlagen haben einen Turm, auf dem verdrehbar eine sogenannte Gondel angeordnet ist, die auch als Maschinenhaus bezeichnet wird. An dieser Gondel ist stirnseitig der Rotor angeordnet und mit einer Rotorwelle verbunden, die in die Gondel hineinragt. In der Gondel selbst sind dann gegebenenfalls ein Getriebe sowie der für die Stromerzeugung dienende Generator sowie möglicherweise weitere Komponenten angeordnet.

Einerseits gegen Witterungseinflüsse, andererseits aber auch zur Ableitung von Windlasten ist die Gondel mit einer Verkleidung bzw. mit einem Gehäuse zu versehen bzw. zu verschließen.

Hierzu sind aus dem Stand der Technik unterschiedliche Ansätze bzw. Vorgehensweisen bekannt.

So sind selbsttragende Konstruktionen aus Kunststoff, typischerweise GFK, bekannt, die aus wenigen Segmenten bestehen, z.B. zwei Unterteilen und einem Deckel. Problematisch hierbei ist allerdings, einerseits die Größe der Bauteile und die damit verbundene hohe Ungenauigkeit hinsichtlich geometrischer Toleranzen, die im GFK-Bau systembedingt sind. Auch müssen für die Funktionen der selbsttragenden Strukturen relativ großvolumige Trägerstrukturen im Laminat aufgebaut werden, was in den räumlich beengten Gondeln oft zu konstruktiven Einschränkungen führt. Auch ist der Transport solcher bekannter groß dimensionierter Elemente aufwendig, da die Verkleidungen in der Regel aus wenigen großen Elementen (häufig nur 1 Bauteil) bestehen. Die so erforderlichen Sondertransporte sind logistisch aufwendig und ziehen hohe Kosten nach sich.

Bekannt sind ferner selbsttragende Konstruktionen aus Stahl oder Aluminium mit interner Struktur oder selbsttragenden Schalen. Die Strukturen sind dabei üblicherweise recht einfach und strukturell günstig aufgebaut, Metallplatten (auch Aluminium) sind aber als flächiger Werkstoff wegen der verhältnismäßig hohen Dichte bzw. der Kosten (insbesondere bei Aluminium) aus wirtschaftlicher Sicht nicht besonders geeignet.

Schließlich sind tragende Stahlstrukturen für den Aufbau von Gondelgehäusen bzw. Hüllen bekannt, die beplankt werden. Das heißt an diese Stahlstrukturen werden nicht selbst tragende Flächenelemente aus GFK oder einem metallischen Werkstoff mit einer großen Anzahl an Nieten oder Schrauben unmittelbar befestigt. Bei diesen bekannten Systemen ergeben sich dadurch eine Vielzahl an Trennstellen, die fertigungstechnisch aufwendig sind, da sie gegen Witterungseinflüsse dicht ausgeführt werden müssen. Dabei steigen erfahrungsgemäß die Kosten für das System deutlich an, wenn eine systematische Abdichtung zwischen den Segmenten erreicht werden soll, da dann hohe Genauigkeiten und ein hoher Montageaufwand benötigt sind. Darüber hinaus ist ein Transport der nicht selbsttragend ausgeführten Flächenelemente aufwändig; diese müssen in komplizierten und platzraubenden Haltestrukturen transportiert werden.

Ein Beispiel für ein aus faserverstärkten Kunststoffelementen aufgebautes Gondelgehäuse ist in der DE 10 2006 001 931 A1 offenbart. Bei dem offenbarten Beispiel handelt es sich um eine selbsttragende Konstruktion aus faserverstärktem Kunststoff, die in der Konstruktion aufwendig ist. Darüber hinaus sind die einzelnen Bauteile der hier gezeigten Konstruktion, z.B. eine Seitenwandverkleidung sehr groß ausgeführt, was zu Problemen einerseits in der Toleranzeinhaltung und andererseits beim Transport dieser Teile führt.

Ein Beispiel für ein Gehäuse einer Gondel aus einer tragenden Stahlstruktur, die zum Aufbau der Hülle beplankt wird, ist in der DE 10 2005 042 394 A1 beschrieben. Hier hat das Gondelgehäuse zunächst eine fachwerkartige Stahlrahmenstruktur, auf die dann einzelne Außenhautverkleidungselemente aufgeschraubt oder in sonstiger Weise befestigt werden.

In WO 2007/132408 A2 ist ein weiteres aus großflächigen Einzelsegmenten aufgebautes Gehäuse für die Gondel einer Windenergieanlage gezeigt.

Die EP 1 860 322 A2 zeigt ein Gehäuse für die Gondel einer Windenergieanlage, bei der auf eine aus Streben aufgebaute Gerüststruktur plankenartige und selbsttragende Verschalungselemente aus glasfaserverstärktem Kunststoff aufgebracht sind. Die Offenbarung dieser Anmeldung deckt sich insoweit mit dem Oberbegriff des Anspruchs 1.

### Darstellung der Erfindung

Es ist insoweit Aufgabe der Erfindung, ein Gehäuse für die Gondel einer Windenergieanlage anzugeben, welches aus kostengünstig herzustellenden Teilen mit geringem fertigungstechnischen Aufwand hergestellt und einfach errichtet werden kann.

Diese Aufgabe wird gelöst mit einem Gehäuse für die Gondel einer Windenergieanlage mit den Merkmalen des Anspruchs 1. Vorteilhafte Weiterbildungen des erfindungsgemäßen Gehäuses sind in den Unteransprüchen 2-14 angegeben.

Erfindungsgemäß wird ein Gehäuse, welches auch als Hülle oder als Außenwand bezeichnet werden kann, für die Gondel, die auch als Maschinenhaus bezeichnet wird, in einer Windenergieanlage zunächst einmal als nicht selbstragendes Konstrukt ausgeführt. Erfindungsgemäß ist nämlich eine Tragstruktur aus Rohren oder Streben, vorzugsweise solchen aus Metall, insbesondere Stahl, oder aus Kunststoff, insbesondere GFK, als "Unterbau" vorgesehen, an welcher dann Verkleidungselemente festgelegt werden. Insoweit ähnelt das erfindungsgemäße Vorgehen bzw. das erfindungsgemäße Gehäuse dem oben im Stand der Technik beschriebenen Aufbau bekannter, nicht selbsttragend ausgeführter Gehäuse. Der wesentliche Unterschied zum oben beschriebenen Stand der Technik besteht dann allerdings in den erfindungsgemäß vorzusehenden Verkleidungselementen. Anders als dort, wo als Verkleidungselemente einfache nicht selbst tragende Metallplanken oder Kunststoffelemente eingesetzt werden, finden gemäß der Erfindung Verkleidungssegmente Verwendung, die eine abdeckende Oberfläche aus Kunststoff, insbesondere GFK, aufweisen und selbsttragend ausgeführt sind.

"Selbsttragend" im Sinne der Erfindung beinhaltet insbesondere, dass nach der Montage der Verkleidungssegmente die dimensionierenden Lasten aus Wind und Verkehr von diesen aufgenommen und über eine gering gehaltene Anzahl von Verbindungspunkten an die Tragstruktur übertragen werden können. Hierin unterscheidet sich die erfindungsgemäße Struktur von den Beplankungen mit nicht selbsttragenden Elementen, die letztlich entlang des gesamten Umfanges mit der Tragstruktur verbunden werden müssen, um Lasten aufnehmen und weiterleiten zu können.

Es werden hier also gewissermaßen zwei aus dem Stand der Technik bekannte, bisher stets unterschiedlich verfolgte Konzepte in geschickter und an sich überraschender Weise miteinander kombiniert, nämlich die Stütz- bzw. Tragstruktur aus dem Konzept der getragenen Bauweise mit dem Aspekt der selbsttragend ausgeführten Einzelelemente, welches aus der insgesamt selbsttragend ausgeführten Bauform für gattungsgemäße Gehäuse bekannt ist. Der für den Fachmann zunächst fernliegende und ungewöhnliche Schritt, die "Beplankung" einer tragenden Struktur, der Tragstruktur aus Rohren oder Streben, unter erhöhtem konstruktiven und Materialaufwand mit tragenden Verkleidungssegmenten auszuführen, führt letztlich zu sehr markanten und nutzbringenden Vorteilen:
- Die Befestigung der Verkleidungssegmente an der Tragstruktur kann an wesentlich weniger Befestigungspunkten vorgenommen werden als bei der bekannten Beplankung, so dass hier erheblich Arbeitszeit eingespart und der Aufwand im Falle von Wartungen oder Reparaturen an dem Gehäuse reduziert werde kann.
- Die Verkleidungssegmente lassen sich wesentlich einfacher transportieren, da sie aufgrund der selbsttragenden Eigenschaft nicht aufwendig abgestützt oder in Halterichtungen verbracht werden müssen. Hierbei ist es von Vorteil, wenn die Verkleidungssegmente in einer Größe ausgeführt werden, die ein Verpacken in üblichen Transportbehältnissen, typischerweise herkömmlichen 40-Fuß-Containern, erlaubt (vergleiche Anspruch 15).
- Die selbsttragenden Verkleidungssegmente müssen nicht rundum auf der Tragstruktur befestigt werden, so dass die Anforderungen an die Maßhaltigkeit abgesenkt werden können, was insbesondere im toleranzbehafteten Kunststoffbau (GFK-Bau) zu einer deutlichen Aufwandsreduzierung und somit Kostenersparnis führt.

Die Verkleidungssegmente sind erfindungsgemäß gebildet aus einem Rahmen, der in einer Ausgestaltung aus Metallrohren oder -streben bestehen kann, in einer anderen Ausgestaltung aber auch aus Kunststoff, insbesondere GFK, und der das Bauteil hält und diesem die eigentliche Stabilität verleiht, sowie einem auf die Rahmenfläche aufgesetzten, mit dem Rahmen fest verbundenen Schalenelement aus Kunststoff, welcher vorzugsweise faserverstärkt ist, insbesondere GFK. Die so gefertigten Verkleidungssegmente sind dann wiederum über die Rahmen mit der Tragstruktur in üblicher Weise, z.B. im Falle von Metallrahmen und einer Tragstruktur aus Metallrohren oder -streben über übliche metallbauliche Mittel verbunden, d.h. verschraubt, verschweißt oder dergleichen.

Im Falle eines Rahmens aus Kunststoff, besteht dieser bevorzugt aus dem Kunststoffmaterial des Schalenelementes. So treten keine Spannungen oder dergleichen in dem Verkleidungssegment auf, die bei der Verwendung unterschiedlicher Materialien z.B. aus unterschiedlichen thermischen Ausdehnungskoeffizienten herrühren können.

Durch den Rahmen, der sich in dem jeweiligen Verkleidungssegment mit Vorteil über einen überwiegenden Teil von dessen Länge und Breite erstreckt, wird die Stabilität des Verkleidungssegmentes hergestellt. Entsprechend kann das Schalenelement aus Kunststoff mit der Dicke bzw. Materialstärke geringer dimensioniert gestaltet werden, es muss keine Traglast in der Konstruktion selbst übernehmen, sondern lediglich gegenüber auflastenden Schneelasten und der Windlast Bestand haben.

Die erfindungsgemäße feste Verbindung zwischen dem Schalenelement und dem Rahmen kann mit Vorteil bereits bei der Fertigung dieses Bauteils hergestellt werden, wobei der Rahmen z.B. in das Schalenelement einlaminiert werden kann. Der Rahmen wiederum kann dann mit einfachen maschinen- bzw. metallbaulichen Mitteln an der Tragstruktur festgelegt werden, wobei eine wesentlich geringere Anzahl von Verbindungspunkten erforderliche ist als etwa bei der bekannten Verplankung einfacher Hüllenelementen.

Die Verbindung zwischen dem Rahmen eines Verkleidungssegmentes und der Tragstruktur kann dabei insbesondere auch lösbar gestaltet werden, um einzelne Verkleidungselemente zu Wartungszwecken und auch im Falle eines erforderlichen Austausches entfernen und gegebenenfalls auswechseln zu können.

Ein weiterer Vorteil des erfindungsgemäßen Gehäuses, wenn die Rahmen der Verkleidungssegmente aus Metall gebildet sind, besteht darin, dass sich Metallbauteile, insbesondere Stahlbauteile, wie sie durch den Rahmen gebildet sind, mit einer deutlich höheren Genauigkeit und Maßhaltigkeit fertigen lassen, als Kunststoffelemente. So treten ansonsten anzutreffende Probleme mit Toleranzüberschreitungen und Maßhaltigkeit nicht auf bzw. müssen solche Randbedingungen nicht beachtet werden.

Eine Verbindung des Rahmens mit dem Schalenelement zur Bildung des Verkleidungssegmentes kann z.B. dadurch geschaffen werden, dass das Kunststoffmaterial des Schalenelementes zumindest teilweise bzw. in Abschnitten die Rohre bzw. Streben oder sonstigen Elemente des Rahmens überlappt. Wichtig hierbei ist, dass diejenigen Bereiche des Rahmens, die einer späteren Anbindung an die Tragstruktur dienen, nicht von dem Kunststoffmaterial überdeckt werden, sondern frei zugänglich sind. Bei einer solchen Ausgestaltung der Verbindung zwischen dem Schalenelement und dem Rahmen ist es insbesondere bei Verwendung unterschiedlicher Materialien für Rahmen und Schalenelemente von Vorteil, wenn diese so ausgeführt ist, dass eine Relativbewegung zwischen dem Rohr bzw. der Strebe oder den sonstigen Elementen des Rahmens und dem Schalenelement insbesondere solche aufgrund unterschiedlicher thermischer Ausdehnungen, möglich bleibt. Hier kann z.B. auch ein Gel-Code eingesetzt werden, der ein Entlanggleiten des Rahmens an dem Kunststoffmaterial ermöglicht. Dabei sollten dann entsprechende Überlappungen des Kunststoffmaterials über den Rahmen mit Vorteil nur die in eine Längsrichtung verlaufenden Rohre bzw. Streben des Rahmens betreffen, da in dieser Richtung die größte Relativbewegung aufgrund z.B. thermischer Belastungen zu erwarten ist.

Das erfindungsgemäße Gehäuse kann mit Vorteil so ausgeführt sein, dass zwischen den Verkleidungssegmenten an den Stoßstellen Luftspalte belassen sein können mit einer Breite von bis zu 20 mm, vorzugsweise im Bereich von 10 mm bis 15 mm. Diese Luftspalte erlauben die Einhaltung sehr grober Toleranzen für den Bau der Verkleidungssegmente, insbesondere bspw. der Schalenelemente aus Kunststoff, insbesondere GFK, bei deren Herstellung höhere Maßungenauigkeiten typischerweise auftreten können als bei der Herstellung einer darunter angeordneten, für die Maßhaltigkeit des Verkleidungssegmentes relevanten Rahmenstruktur aus z.B. Metall. Diese Luftspalte dienen zudem auch, jedenfalls zu einem gewissen Maß, einer Zufuhr von frischer kalter Luft in das Innere der Gondel, sowie einer Ableitung erwärmter Luft aus der Gondel, so dass hierdurch zumindest ein gewisser Kühlungseffekt für die in der Gondel angeordneten Wärme erzeugenden Komponenten erzielt werden kann.

Mit Vorteil sind die Stoßstellen so ausgeführt, dass ein in einer Falllinie des Gehäuses oberhalb eines zweiten Verkleidungssegmentes angeordnetes erstes Verkleidungssegment mit seinem Rand über den Rand des zweiten Verkleidungssegmentes übersteht. Dadurch wird insbesondere verhindert, dass an der Außenwand des Gehäuses ablaufendes Regenwasser durch die Luftspalte in das Innere der Gondel gelangt. Durch die Überlappung läuft das Wasser stets von der Außenseite eines Verkleidungssegmentes auf die Außenseite des angrenzenden Verkleidungssegmentes, ein Eindringen von Wasser in das Innere der Gondel wird so verhindert.

Insbesondere in Gebieten, in denen das Auftreten von Sandstürmen droht oder mit dem Wind erhebliche Anteile an Sand oder sonstigen abrasiven, korrosiven oder ansonsten schädigenden Teilchen, z.B. Salzpartikel oder Feuchtigkeit, mitgeführt werden, können die Luftspalte durch Dichtlippen jedenfalls teilweise verschlossen sein. Dies verhindert das Eindringen von Sand oder anderen ungewünschten Teilchen in das Innere der Gondel, wo durch solchen Sand oder solche Teilchen Schäden hervorgerufen werden können, z.B. durch beschleunigten mechanischen Verschleiß oder Störungen in der Elektronik.

Die Rahmen der Verkleidungssegmente sind bevorzugt als geschlossene umlaufende Rahmen gefertigt, mit besonderem Vorteil aus Vierkantrohren. Geschlossene umlaufende Rahmen sind besonders stabil, Vierkantrohre eignen sich besonders zum Anbringen an der Tragstruktur aufgrund einer ebenen Anlagefläche.

Wie bereits ausgeführt, kann das Verkleidungssegment mit seiner abdeckenden Oberfläche, z.B. das Schalenelement, mit im Wesentlichen glatten Oberflächen gebildet werden und mit geringer Dicke, die weniger als 10 mm, vorzugsweise 3 bis 5 mm und in einem besonders bevorzugten Ausführungsbeispiel 4 mm betragen kann. Solche dünnen und im Wesentlichen planen Elemente aus Kunststoff, insbesondere GFK, sind kostengünstig und einfach herzustellen, sie sind jedoch nach wie vor ausreichend stabil, um auflastende Schneelasten oder Windlasten aufzunehmen und auf den Rahmen bzw. über diesen auf die Tragstruktur zu übertragen.

Ein besonders einfacher Aufbau der Tragstruktur ergibt sich, wenn diese gemäß einer vorteilhaften Ausgestaltung der Erfindung aus einem Trägerabschnitt, der im Wesentlichen in Längsrichtung der Gondel verläuft, und zumindest zwei, vorzugsweise drei, diese Tragstruktur in Querrichtung der Gondel überspannende Portale gebildet ist. An diesen Portalen können dann zumindest die seitlichen und oberen Verkleidungssegmente festgelegt sein. Hierzu sind die Portale ebenfalls bevorzugt aus einem Vierkantrohr oder einer Strebe mit Vierkantprofil gebildet.

In einer möglichen Ausgestaltung eines erfindungsgemäßen Gehäuses kann dieses insgesamt zwölf Verkleidungssegmente enthalten, von denen jeweils zwei an allen sechs Seiten des Gehäuses angebracht sind. Allerdings können auch mehr Verkleidungssegmente vorgesehen sein, da mit Vorteil die maximalen Abmessungen der einzelnen Verkleidungssegmente so gewählt werden, dass sie mit herkömmlichen Transporteinrichtungen transportiert werden können, insbesondere in einem konventionellen 40-Fuß-Container Platz finden, auch zusammen mit einem vorzusehenden Transportgestell bzw. Schutzelementen.

Neben den oben bereits beschriebenen Vorteilen ergibt sich für das erfindungsgemäße Gehäuse ein weiterer Vorteil darin, dass für den Aufbau von Anbauteilen an dem Gehäuse, z.B. auf der Außenseite der Gondel, Verbindungen geschaffen werden können, die in die Verstärkungsstrukturen der Verkleidungssegmente, z.B. in das Material der Rahmen, reichen, so dass hier einfache Verbindungen, z.B. Schraubverbindungen geschaffen werden können.

### Kurze Beschreibung der Zeichnungen

Weitere Vorteile und Merkmale der Erfindung ergeben sich aus der nachfolgenden Beschreibung eines Ausführungsbeispieles anhand der beigefügten Figuren. Dabei zeigen:

Figur 1: eine schematische dreidimensionale Ansicht von schräg von vorn auf ein erfindungsgemäßes Gehäuse für die Gondel einer Windkraftanlage,

Figur 2: eine dreidimensionale Ansicht des in Figur 1 gezeigten Gehäuses aus anderer Perspektive, nämlich schräg von hinten unten,

Figur 3: in schematischer Darstellung in einem Ausführungsbeispiel ein Verkleidungssegment zum Aufbau eines erfindungsgemäßen Gehäuses,

Figur 4: schematisch die Tragstruktur eines erfindungsgemäßen Gehäuses mit zum Teil daran angeordneten Verkleidungssegmenten,

Figur 5: schematisch die Befestigungsweise eines Verkleidungssegmentes an der Tragstruktur eines erfindungsgemäßen Gehäuses,

Figur 6: den Überlapp zwischen aneinander anstoßenden Verkleidungssegmenten in vertikaler Richtung,

Figur 7: eine vergrößerte Ausschnittsdarstellung eines erfindungsgemäßen Gehäuses im Bereich der Rotorwellendurchführung zur Darstellung des Überlapps in diesem Bereich,

Figur 8: in vergrößerter Darstellung eine Detailansicht zur Darstellung des Überlapps an der Schnittstelle zweier Dachsegmente des erfindungsgemäßen Gehäuses,

Figur 9: in vergrößerter Darstellung einen Bereich des Überlapps zwischen zwei Verkleidungssegmenten im Bereich des Daches des Gehäuses und

Figur 10: in schematischer Darstellung die Anordnung einer Dichtlippe zur Abdichtung des Übergangsbereiches zwischen zwei Verkleidungssegmenten.

### Weg(e) zur Ausführung der Erfindung

In den Figuren sind in schematischen und nichtmaßstabsgerechten Prinzipdarstellungen einzelne Ansichten eines Ausführungsbeispiels für ein erfindungsgemäßes Gehäuse für die Gondel einer Windenergieanlage gezeigt. Diese Figuren wie auch die nachstehende Erläuterung des dort gezeigten Ausführungsbeispiels sollen das Verständnis der Erfindung in ihrer allgemeinen Tragweite befördern und sind nicht beschränkend.

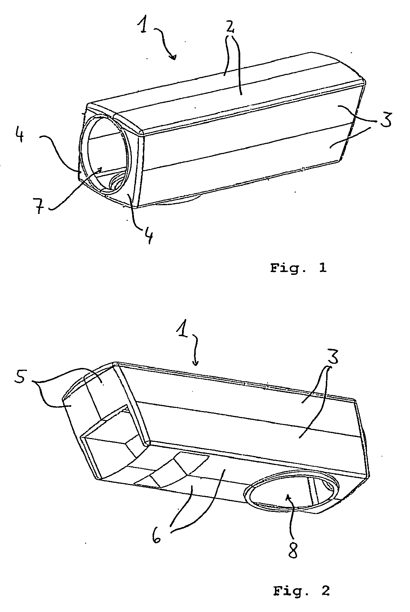

In den Figuren 1 und 2 ist in zwei verschiedenen Ansichten der prinzipielle Aufbau eines erfindungsgemäßen aus einer Tragstruktur und mehreren Verkleidungssegmenten aufgebauten Gehäuses 1 für die Gondel einer Windenergieanlage dargestellt. Das Gehäuse 1 kann auch als Maschinenhausverkleidung bezeichnet werden. An einem in diesen Figuren nicht näher dargestellten Tragrahmen sind insgesamt zwölf Verkleidungssegmente angeordnet und festgelegt, die selbsttragend ausgebildet sind und insgesamt das Gehäuse 1 bilden. Diese Segmente teilen sich auf in zwei Deckensegmente 2, die sich als langgestreckte Bauteile über die gesamte Länge des Gehäuses 1 erstrecken und in etwa mittig des Gehäusedeckels bzw. der Gehäusedecke mit einer in Längsrichtung verlaufenden Naht aneinanderstoßen, insgesamt vier Seitenwandsegmente 3, von denen jeweils zwei vertikal übereinander geordnet, sich über die gesamte Länge des Gehäuses 1 erstreckende Segmente die rechte bzw. linke Seitenwand des Gehäuses 1 bedecken, zwei Frontsegmente 4, zwei Hecksegmente 5 und zwei sich wiederum über die gesamte Länge des Gehäuses 1 erstreckende Bodensegmente 6, die ebenfalls in einer in etwa mittig des Bodens in Längsrichtung verlaufenden Nahtstelle aneinander stoßen.

Die Frontsegmente 4 belassen eine Durchführungsöffnung 7, durch die die Rotorwelle hindurchgeführt wird und auf der außerhalb des Gehäuses 1 die Nabe mit den Rotorblättern sitzt.

Eine weitere Öffnung 8 ist durch die Bodensegmente 6 ausgespart. Über diese Öffnung 8 wird das Gehäuse 1 an den Turm einer Windenergieanlage angeschlossen über eine drehbare Verbindung zur Einstellung des Azimuthwinkels.

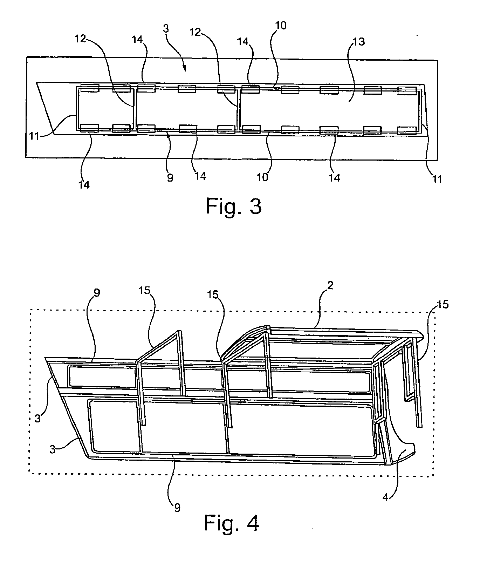

Wie bereits ausgeführt ist für die Erfindung wesentlich, dass das Gehäuse 1 aufgebaut ist aus einer Tragstruktur und darauf befestigten selbstragenden Elementen mit einer Kunststoffoberfläche, die in diesem Ausführungsbeispiel bevorzugt eine GFK-Fläche ist. Ein Beispiel, wie ein Verkleidungselement selbstragend aufgebaut sein kann, ist in Figur 3 in einer schematischen Ansicht dargestellt. In Figur 3 ist als Beispiel ein Seitenwandsegment 3 gezeigt, wobei die hier dargestellte Bauweise und der gezeigte Aufbau grundsätzlich auf die anderen Verkleidungssegmente, Deckensegment 2, Frontsegment 4, Hecksegment 5 sowie Bodensegment 6, übertragen werden kann.

Das Seitenwandsegment 3 in Figur 3 enthält zunächst einen Rahmen 9, der auch als Gerüstkonstruktion bezeichnet werden kann. Dieser Rahmen 9 ist hier aus Metallstreben bzw. -rohren gebildet, wobei neben umlaufenden Längs- 10 und Querstreben 11 sprossenartige Verbindungsstreben 12 zur Stabilisierung und Möglichkeit der Anbindung vorgesehen sind. Auf diesen Rahmen 9 bzw. dieses aus dem Rahmen 9 zusammen mit den Verbindungsstreben gebildete Gefach ist ein Schalenelement 13 aus GFK aufgelegt und mit dem Rahmen 9 fest verbunden. Das Schalenelement 13 besteht aus einer einfachen und insgesamt mit einer Stärke von etwa 4 mm dünn gehaltenen GFK-Platte, die an sich noch nicht eigenstabil bzw. selbsttragend ist. Erst in Verbindung mit dem Rahmen 9 erhält das so gebildete Verkleidungssegment in Form des Seitenwandsegmentes 3 seine selbsttragende Eigenschaft.

Zur Verbindung des Schalenelementes 13 mit dem Rahmen 9 sind GFK Überlappungen 14 gebildet, die die Längsstreben 10 des Rahmens 9 tunnelartig überdecken. Dabei besteht zwischen den Längsstreben 10 des Rahmens 9 und den Überlappungen 14 in solcher Weise ein Spiel, dass eine Relativbewegung zwischen Rahmen 9 und Schalenelement 13 möglich ist, insbesondere eine solche aufgrund unterschiedlicher thermischer Ausdehnungen. Da solche thermische Ausdehnungen in Richtung der längsten Erstreckung am relevantesten sind, verlaufen die tunnelartigen Überlappungen 14 in eben dieser Längsrichtung und die Querstreben 11 sowie die Verbindungsstreben 12 sind nicht durch Überlappungen gehalten bzw. fest mit dem Schalenelement 13 verbunden. Die Überlappungen 14 sind zweckmäßigerweise auch aus GFK gebildet und können insbesondere bereits beim Herstellungsprozess des Schalenelementes 13 ausgeformt werden. Der Rahmen 9 kann in dieser Phase insoweit in das Schalenelement 13 einlaminiert werden zur Bildung des selbsttragenden Verkleidungselementes (Seitenwandelement 3).

In dem hier gezeigten Ausführungsbeispiel ist der Rahmen 9 gebildet aus Vier-Kant-Metallrohen, anstelle solcher Metallrohre können hier aber auch gleichwertige Gebilde aus Kunststoff, insbesondere aus GFK, Verwendung finden. Die Verwendung von GFK gleicher Art wie diejenige des Schalenelementes 13 hat den Vorteil, dass wegen gleicher Materialeigenschaften Unterschiede in der thermischen Ausdehnung nicht zu erwarten sind, so dass hier keine Ausgleichsmaßnahmen zu treffen sind. Andererseits ist ein Grundrahmen aus Metall mit einfachen Mitteln maßhaltiger herzustellen als vergleichbare GFK-Elemente.

In Figur 4 ist ausschnittsweise dargestellt, wie bei einem erfindungsgemäßen Gehäuse an einer Tragstruktur 15, von der hier drei vertikal ausgerichtete Bögen dargestellt sind, die einzelnen Verkleidungssegmente, hier Seitenwandsegmente 3, Dachsegmente 2 und ein Frontsegment 4 festgelegt sind. Die Festlegung erfolgt hierbei in lösbarer Weise mit üblichen Befestigungsmechanismen, insbesondere Verschraubungen. Dabei sind die Verbindungsstreben 12 der die Eigenstabilität der Verkleidungssegmente bildenden Rahmen 9 so angeordnet, dass sie bei richtiger Anbringung des jeweiligen Verkleidungssegmentes an den Bögen der Tragstruktur 15 angrenzend zu diesen zu liegen kommen und mit entsprechenden Mitteln dort festgelegt, insbesondere verschraubt werden können.

Die Tragstruktur 15 ist in diesem Beispiel aus Metallstreben bzw. -rohren gebildet, kann aber auch aus Kunststoff, insbesondere GFK bestehen.

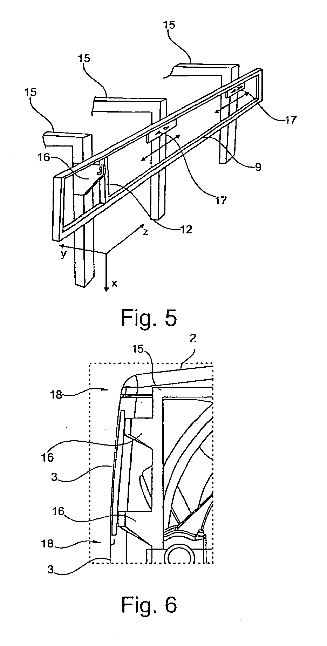

In Figur 5 ist in schematischer Darstellung diese Anbringung des Rahmens 9 eines Verkleidungssegmentes an der Tragstruktur 15 noch einmal veranschaulicht. In der Figur links ist dabei das vordere Ende des Gehäuses dargestellt, in dem nach Fertigstellung die Durchführungsöffnung 7 (vgl. Figur 1) liegt. An diesem vorderen Ende ist an dem nächstgelegenen Bogen der Tragstruktur 15 eine Konsole 16 ausgebildet, an welcher der Rahmen 9 mit einer Verbindungsstrebe 12 anliegt und dort verschraubt wird. Diese Verschraubung gibt eine exakte Festlegung in der wie in der Figur eingezeichneten z-Richtung. An den in Richtung des hinteren Ende des Gehäuses nachfolgenden Bögen der Tragstruktur 15 wird der Rahmen jeweils über Langlöcher 17 verschraubt, die einerseits einen Ausgleich von Fertigungstoleranzen ermöglichen, andererseits Dimensionsunterschiede aufnehmen können, die aufgrund unterschiedlicher thermischer Ausdehnungsverhalten zwischen der Tragstruktur 15 und dem Rahmen 9 entstehen können.

In Figur 6 ist in einer Ansicht von vorn und ohne Frontsegment schematisch ein Ausschnitt aus dem Gehäuse 1 gemäß dem Ausführungsbeispiel dargestellt. Wichtig zu erkennen in dieser Ausgestaltung sind die Bereiche der Überlappungen 18, in denen jeweils das obere Ende eines tiefer gelegenen Verkleidungssegmentes unter das anstoßende Ende eines höher gelegenen Verkleidungssegmentes geführt ist zur Ausbildung eines Luftspaltes bei gleichzeitiger sicherer Abdichtung gegen ablaufendes Regen- oder Spritzwasser.

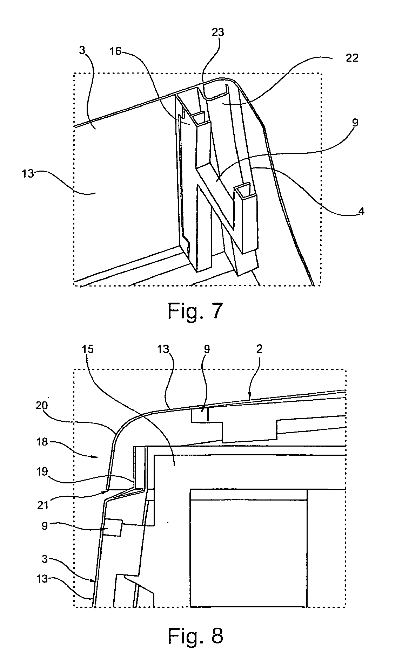

Einer solcher Überlapp zwischen einem Deckensegment 2 und einem Seitenwandsegment 3 ist in Figur 8 noch einmal ausschnittsvergrößert und besser erkennbar dargestellt. Hier ist besonders gut zu erkennen, dass im Bereich des Überlapps 18 das obere Ende 19 des tiefer liegend angeordneten Verkleidungssegmentes, hier des Seitenwandsegmentes 3, zurückspringt und unter das Ende 20 des oberen Verkleidungssegmentes, hier des Deckensegmentes 2, geführt ist. Das Ende 20 des Deckensegmentes 2 verläuft dabei in Flucht mit dem sonstigen Verlauf des Schalenelementes 13 des Seitenwandsegmentes 3. Im Bereich des Überlapps verbleibt dabei ein Luftspalt 21 zwischen Deckensegment 2 und Seitenwandsegment 3, der 5 bis 20 mm, insbesondere 10 bis 15 mm betragen kann und insbesondere einer Verringerung der Toleranzanforderungen an die Maßhaltigkeit der Schalenelemente 13 des Deckesegmentes 2 und des Seitenwandsegmentes 3 dient. Solche Luftspalte sind bei einem erfindungsgemäßen Gehäuse an sämtlichen Stoßstellen zwischen zwei Verkleidungssegmenten belassen.

In Figur 7 ist eine weitere Stoßstelle dargestellt, hier die im Wesentlichen vertikale Stoßstelle zwischen einem Seitenwandsegment 3 und einem Frontsegment 4. Im Bereich dieser Stoßstelle ist das Schalenelement 13 des Seitenwandsegmentes 3 insgesamt dreifach gekröpft geführt zur Bildung einer in etwa U-förmigen Rinne 22, die wiederum von einem umgebogenen Rand 23 des Frontsegmentes 4 bedeckt wird. Auch hier ist wieder ein Luftspalt zwischen dem umgebogenen Rand 23 des Frontsegmentes 4 und dem mit diesem Rand fluchtend verlaufenden Teil des Schalenelementes 13 des Seitenwandsegmentes 3 zu erkennen. Die U-förmige Rinne 22 sorgt nicht nur für eine Wasserdichtigkeit, sondern stellt auch eine Art Labyrinth-Dichtung dar, die zumindest bis zu einem gewissen Grad das Eindringen von Schmutzpartikeln, Sand und dergleichen in das Innere des Gehäuses zu verhindern hilft.

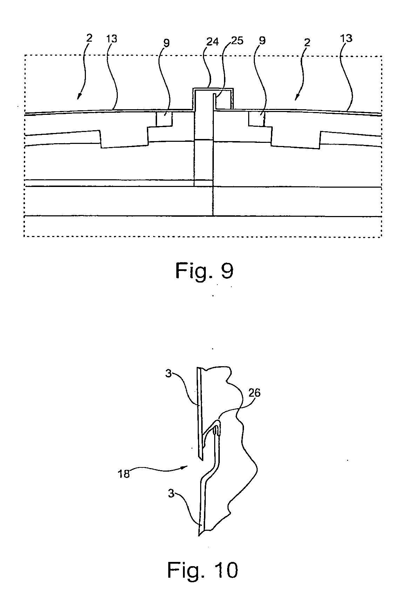

In ähnlicher Weise ist auch an der Nahtstelle zwischen zwei Deckenelementen 3 eine Art Labyrinth-Dichtung ausgebildet, wie dies in Figur 9 dargestellt ist. Hier überragt das Schalenelement 13 des in der Figur links dargestellten Deckensegmentes 2 mit einem zu einer Art Tunnel dreifach gekröpften Endbereich 24 das nach oben aufgestellte Ende 25 des Schalenelementes 13 des in der Figur rechts dargestellten Deckenelementes 2.

Um insbesondere in Bereichen mit verstärktem Eintrag schädigender Partikel, wie etwa abrasiver Sandpartikel, korrosiver Salzteilchen oder dergleichen, eine noch bessere Abdichtung der Luftspalte zu erreichen, können in diese Dichtlippen z.B. aus Gummi eingesetzt werden, die zwar weiterhin auch den in Figur 9 zu erkennenden Luftspalt und damit die Möglichkeit der Vorgabe großzügiger Toleranzen für die Fertigung der Schalenelemente 13 belassen, jedoch für ein sicheres Maß der Abdichtung sorgen. Gezeigt ist dies in einer sehr schematischen Ansicht in Figur 10 am Beispiel der Stoßstelle zwischen zwei Seitenwandsegmenten 3. Hier ist im Bereich des Überlapps 18 auf das untere der Seitenwandsegmente 3 eine Dichtlippe 26 aufgesetzt, die an dem oberen Seitenwandsegment 3 anliegt und so für eine Abdichtung dieses Spaltraumes sorgt.

### Bezugszeichenliste

- 1: Gehäuse
- 2: Deckensegment
- 3: Seitenwandsegmenten
- 4: Frontsegment
- 5: Hecksegment
- 6: Bodensegment
- 7: Durchführungsöffnung
- 8: Öffnung
- 9: Rahmen
- 10: Längsstrebe
- 11: Querstrebe
- 12: Verbindungsstrebe
- 13: Schalenelement
- 14: Überlappung
- 15: Tragstruktur
- 16: Konsole
- 17: Langloch
- 18: Überlapp
- 19: Ende
- 20: Ende
- 21: Luftspalt
- 22: Rinne
- 23: umgebogener Rand
- 24: Endbereich
- 25: Ende
- 26: Dichtlippe

## Patentansprüche

1. Gehäuse für die Gondel einer Windenergieanlage mit einer Tragstruktur (15) aus Rohren oder Streben, vorzugsweise aus Metall, insbesondere Stahl, oder Kunststoff, insbesondere GFK, und an dieser Tragstruktur (15) festgelegten Verkleidungssegmenten (2, 3, 4, 5, 6), die eine abdeckende Oberfläche aus Kunststoff, insbesondere GFK, aufweisen und selbsttragend ausgeführt sind, **dadurch gekennzeichnet, dass** die Verkleidungssegmente (2, 3, 4, 5, 6) jeweils einen versteifenden Rahmen (9) und jeweils ein auf diesem Rahmen (9) auf eine Rahmenfläche flächig aufgesetztes, mit dem Rahmen (9) fest verbundenes Schalenelement (13) aus Kunststoff, insbesondere GFK aufweisen, wobei die Rahmen (9) mit der Tragstruktur (15) verbunden sind.

2. Gehäuse nach Anspruch 1, **dadurch gekennzeichnet, dass** die Verkleidungssegmente (2, 3, 4, 5, 6) Verbundbauteile sind mit Rahmen (9) aus Metallrohren oder -streben, vorzugsweise aus Stahl, auf die die Schalenelemente (13) aufgesetzt sind, und dass die Rahmen (9) mit der Tragstruktur (15) über übliche, insbesondere metallbauliche, Mittel verbunden sind.

3. Gehäuse nach Anspruch 1, **dadurch gekennzeichnet, dass** die Rahmen (9) der Verkleidungssegmente (2, 3, 4, 5, 6) aus Kunststoff gebildet sind, insbesondere aus GFK.

4. Gehäuse nach einem der vorhergehenden Ansprüche, **dadurch gekennzeichnet, dass** die Schalenelement (13) mit dem jeweils zugeordneten Rahmen (9) durch Überlappen (14) des Kunststoffmaterials über Teile, insbesondere Rohre bzw. Streben (11), des Rahmens (9) verbunden sind, wobei zumindest in einer Verbindung des Rahmens (9) mit der Tragstruktur (15) dienenden Bereichen Teile, insbesondere die Rohre oder Streben (11), des Rahmens (9) frei liegen.

5. Gehäuse nach Anspruch 4, **dadurch gekennzeichnet, dass** die Überlappungen (14) derart ausgeführt sind, dass Relativbewegungen zwischen dem Rahmen (9) und dem Schalenelement (13), insbesondere solche aufgrund unterschiedlicher thermischer Ausdehnung, ermöglicht sind.

6. Gehäuse nach einem der vorhergehenden Ansprüche, **dadurch gekennzeichnet, dass** die Rahmen (9) der Verkleidungssegmente (2, 3, 4, 5, 6) als geschlossen umlaufende Rahmen (9) gefertigt sind, vorzugsweise aus Vierkantrohren.

7. Gehäuse nach einem der vorhergehenden Ansprüche, **dadurch gekennzeichnet, dass** zwischen den Verkleidungssegmenten (2, 3, 4, 5, 6) an den Stoßstellen Luftspalte (21) mit einer Spaltbreite von 5 mm bis 20 mm, insbesondere von 10 mm bis 15 mm, belassen sind.

8. Gehäuse nach Anspruch 7, **dadurch gekennzeichnet, dass** die Stoßstellen so ausgeführt sind, dass ein in einer Falllinie des Gehäuses (1) oberhalb eines zweiten Verkleidungssegmentes (3, 4, 5, 6)) angeordnetes erstes Verkleidungssegment (2, 3) mit seinem Rand über den Rand des zweiten Verkleidungssegmentes (3, 4, 5, 6) übersteht.

9. Gehäuse nach einem der Ansprüche 7 oder 8, **dadurch gekennzeichnet, dass** zumindest teilweise an den Stoßstellen Dichtlippen (26) zum Verschließen der Luftspalte angeordnet sind.

10. Gehäuse nach einem der vorhergehenden Ansprüche, **dadurch gekennzeichnet, dass** die abdeckenden Oberflächenabschnitte der Verkleidungssegmente (2, 3, 4, 5, 6) mit im Wesentlichen glatten Oberflächen ausgeführt sind mit einer Dicke von weniger als 10 mm, vorzugsweise 3 bis 5 mm, besonders bevorzugt etwa 4 mm.

11. Gehäuse nach einem der vorhergehenden Ansprüche, **dadurch gekennzeichnet, dass** die Tragstruktur (15) einen unteren, im wesentlichen in Längsrichtung der Gondel verlaufenden Trägerabschnitt und wenigstens zwei, vorzugsweise drei diese Tragstruktur in Querrichtung der Gondel überspannende Portale aufweist, an denen zumindest die seitlichen und oberen Verkleidungssegmente (2, 3) festgelegt sind.

12. Gehäuse nach einem der vorhergehenden Ansprüche, **dadurch gekennzeichnet, dass** zumindest eines der Verkleidungssegmente (2, 3, 4, 5, 6) lösbar an der Tragstruktur (15) festgelegt ist.

13. Gehäuse nach einem der vorhergehenden Ansprüche, **dadurch gekennzeichnet, dass** insgesamt zwölf Verkleidungssegmente (2, 3, 4, 5, 6) angeordnet sind, jeweils zwei zur Verkleidung der Oberseite, der Unterseite, der rechten, der linken und der vorderen wie hinteren Stirnseite der Gondel.

14. Gehäuse nach einem der vorhergehenden Ansprüche, **dadurch gekennzeichnet, dass** die Größe der Verkleidungssegmente (2, 3, 4, 5, 6) derart bemessen ist, dass diese ggf. inklusive von Stütz- und/oder Schutzelementen in einem üblichen 40-Fuß-Container aufgenommen werden können.

## Claims

1. A housing for the nacelle of a wind power plant having a supporting structure (15) composed of tubes or braces, preferably made of metal, In particular steel, or plastic, especially fiberglass reinforced plastic (FRP), and on said supporting structure (15) fixed facing elements (2, 3, 4, 5, 6), having a covering surface made of plastic, in particular fiberglass reinforced plastic and are self-supporting, **characterised in that** the facing elements (2, 3, 4, 5, 6) have a stiffening frame (9) and respectively a shell element (13), made of plastic, in particular fiberglass reinforced plastic, fixedly connected to the frame (9), put on said frame (9) flat on a frame surface, whereas the frames (9) are connected to the supporting structure (15).

2. Housing according to claim 1, **characterised in that** the facing elements (2, 3, 4, 5, 6) are composite components with frames (9) made of metal rubes or braces, preferably made of steel, on which the shell elements (13) are mounted, and that the frames (9) are connected to the supporting structure (15) via usual, particularly metal construction means.

3. Housing according to claim 1, **characterised in that** the frames (9) of the facing elements (2, 3, 4, 5, 6) consist of plastic, particularly made of fiberglass reinforced plastic.

4. A housing according to any of the preceding claims, **characterised in that** the shell elements (13) are connected to the respective associated frame (9) via overlappings (14) of the plastic material via parts, especially tubes or braces (11), of the frame (9), whereas at least parts, especially the tubes or braces (11) of the frame (9), connected to the frame with regions useful to the supporting structure (15), are exposed.

5. Housing according to claim 4, **characterised in that** the overlappings (14) are designed in such a way that relative movements between the frame (9) and the shell element (13), in particular movements caused by a different thermal elongation, are permitted.

6. A housing according to any of the preceding claims, **characterised in that** the frames (9) of the facing elements (2, 3, 4, 5, 6) are built as closed circumferential frames (9), preferably made of square tubes.

7. A housing according to any of the preceding claims, **characterised in that** air gaps (21) are left between the facing elements (2, 3, 4, 5, 6) on the impact points, having a gap width of 5 mm to 20 mm, in particular of 10 mm to 15 mm.

8. Housing according to claim 7, **characterised in that** the impact points are designed in such a way that a first facing element (2, 3) arranged in a fall line of the housing (1) above a second facing element (3, 4, 5, 6) overhangs with its edge over the edge of the second facing element (3, 4, 5, 6).

9. The housing according to one of the claims 7 or 8, **characterised in that** sealing lips (26) are arranged east partially on the impact points close for closing hermetically the air gaps.

10. A housing according to any of the preceding claims, **characterised in that** the covering surface sections of the facing elements (2, 3, 4, 5, 6) are designed with essentially smooth surfaces having a thickness of less than 10 mm, preferably 3 to 5 mm, most preferably approx. 4 mm.

11. A housing according to any of the preceding claims, **characterised in that** the supporting structure (15) has a lower, supporting section extending essentially in longitudinal direction of the nacelle and at least two, preferably three gantries overlapping said supporting structure in transversal direction of the nacelle, on which at least the lateral and upper facing elements (2, 3) are fixed.

12. A housing according to any of the preceding claims, **characterised in that** least one of the facing elements (2, 3, 4, 5, 6) is fixed to the supporting structure (15).

13. A housing according to any of the preceding claims, **characterised in that** in total twelve facing elements (2, 3, 4, 5, 6) are arranged, respectively two for cladding the upper side, the lower side, the right, the left and the front as well as rear front face of the nacelle.

14. A housing according to any of the preceding claims, **characterised in that** the size of the facing elements (2, 3, 4, 5, 6) is sized in such a way that the latter possibly inclusive of supporting and/or protective elements can be accommodated in a usual 40 foot container.

## Revendications

1. Logement destiné à la nacelle d'une installation éolienne comprenant une structure portante (15) composée de tubes ou de montants, de préférence en métal, notamment en acier, ou en plastique, notamment en matière plastique renforcée de fibre de verre, et de segments de revêtement (2, 3, 4, 5, 6) fixés à ladite structure portante (15), présentant une surface couvrante en plastique, en particulier matière plastique renforcée de fibre de verre, et sont conçus de manière autoportante, **caractérisé en ce que** les éléments de revêtement (2, 3, 4, 5, 6) présentent respectivement un cadre raidisseur (cadre) et respectivement un élément de coque (13) fixé à demeure au cadre (9), posé à plat sur une surface de cadre, sur ledit cadre (9), élément de coque en plastique, en particulier plastique renforcé de fibre de verre, dans lequel les cadres (9) sont connectés à la structure portante (15).

2. Logement selon la revendication 1, **caractérisé en ce que** les éléments de revêtement (2, 3, 4, 5, 6) sont des éléments composites avec des cadres (9) en tubes ou montants de métal, de préférence en acier, sur lesquels les éléments de coque (13) sont installés, et **en ce que** les cadres (9) sont connectés à la structure portante (15), par le biais de moyens habituels, en particulier en métal de construction.

3. Logement selon la revendication 1, **caractérisé en ce que** les cadres (9) des éléments de revêtement (2, 3, 4, 5, 6) sont conçus en plastique, en particulier en matière plastique renforcée de fibre de verre.

4. Logement selon l'une quelconque des revendications précédentes, **caractérisé en ce que** les éléments de coque (13) sont connectés au cadre (9) associé correspondant par des chevauchements (14) du plastique de part et d'autre de pièces, en particulier des tubes ou des montants (11) du cadre (9), dans lequel des pièces, en particulier les tubes ou montants (11), du cadre (9) sont exposés au moins dans une liaison du cadre avec des zones utilisées par la structure portante (15).

5. Logement selon la revendication 4, **caractérisé en ce que** les chevauchements (14) sont conçus de telle sorte que des mouvements relatifs sont autorisés entre le cadre (9) et l'élément de coque (13), en particulier des mouvements provoqués par un allongement thermique différent.

6. Logement selon l'une quelconque des revendications précédentes, **caractérisé en ce que** les cadres (9) des éléments de revêtement (2, 3, 4, 5, 6) sont fabriqués sous forme de cadres périphériques fermés (9), de préférence en tubes carrées.

7. Logement selon l'une quelconque des revendications précédentes, **caractérisé en ce que** des entrefers (21) d'une largeur de fente de 5 mm à 20 mm, en particulier de 10 mm à 15 mm, sont aménagés entre les segments de revêtement (2, 3, 4, 5, 6) au niveau des points d`impact.

8. Logement selon la revendication 7, **caractérisé en ce que** les points d'impact sont conçus de telle sorte qu'un premier élément de revêtement (2, 3) disposé au-dessus d'un second élément de revêtement (3, 4, 5, 6) dans une ligne de chute du logement (1), dépasse du bord du second élément de revêtement (3, 4, 5, 6) avec son propre bord.

9. Logement selon l'une quelconque des revendications 7 ou 8, **caractérisé en ce que** des lèvres d'étanchéité (26) sont disposées pour fermer hermétiquement les entrefers au moins partiellement au niveau des points d'impact.

10. Logement selon l'une quelconque des revendications précédentes, **caractérisé en ce que** les sections de surface couvrante des éléments de revêtement (2, 3, 4, 5, 6) sont conçues avec des surface essentiellement lisses, d'une épaisseur inférieure à 10 mm, de préférence 3 à 5 mm, de préférence particulière d'environ 4 mm.

11. Logement selon l'une quelconque des revendications précédentes, **caractérisé en ce que** la structure portante (15) présente une section portante inférieure, s'étendant plus ou moins dans l'axe longitudinal de la nacelle et au moins deux portiques, de préférence trois enjambant ladite structure portante dans la direction transversale de la nacelle, au niveau desquels au moins les éléments de revêtement (2, 3) latéraux et supérieurs sont fixés.

12. Logement selon l'une quelconque des revendications précédentes, **caractérisé en ce qu'**au moins l'un des éléments de revêtement (2, 3, 4, 5, 6) est fixé de manière amovible au niveau de la structure portante (15).

13. Logement selon l'une quelconque des revendications précédentes, **caractérisé en ce que** douze éléments de revêtement (2, 3, 4, 5, 6) sont disposés au total, respectivement deux pour le revêtement de la face supérieure, de la face inférieure, de la face frontale de droite, de gauche, avant et arrière de la nacelle,

14. Logement selon l'une quelconque des revendications précédentes, **caractérisé en ce que** la taille des éléments de revêtement (2, 3, 4, 5, 6) est dimensionnée de telle sorte que ces derniers peuvent être reçus dans un conteneur habituel de 40 pieds, le cas échéant avec les éléments d'appui et/ou de protection.
